# EUROPEAN PATENT APPLICATION

(11) **EP 4 733 913 A1**
(43) Date of publication of application: **29.04.2026**
(21) Application number: 24845835.8
(22) Date of filing: 26.06.2024
(51) Int. Cl.: G06F 3/0484, G06F 1/16, G06F 3/0482

(54) **FOLDABLE ELECTRONIC DEVICE AND METHOD FOR OPERATING SCREEN THEREOF**

(30) Priority: 24.07.2023 KR 20230096358; 04.09.2023 KR 20230117061
(71) Applicant: Samsung Electronics Co., Ltd., Suwon-si, Gyeonggi-do 16677 (KR)
(72) Inventor: CHOI, Yangsoo, Suwon-si, Gyeonggi-do 16677 (KR); HWANG, Minkyung, Suwon-si, Gyeonggi-do 16677 (KR); HEO, Changryong, Suwon-si, Gyeonggi-do 16677 (KR)
(74) Representative: HGF
(86) International application number: PCT/KR2024/008893
(87) International publication number: WO 2025/023531

(57) **Abstract**

The electronic device according to an embodiment may be configured to display a first execution screen on the display by using a first display area in a first state in which the first housing, the second housing, and the third housing are folded with respect to each other. The electronic device according to an embodiment may be configured such that, upon recognizing a transition of the second housing and the third housing from a folded state to a second state in which same are unfolded, while the first housing and the second housing remain folded, on the basis of data received from the sensing device while the first execution screen is displayed through the first display area, the first display area is deactivated on the basis of the transition from the first state to the second state, and a second execution screen is displayed on the display through the second display area and the third display area. The electronic device according to an embodiment may be configured such that, upon recognizing a transition of the first housing, the second housing, and the third housing from the first state to a third state in which same are all unfolded, on the basis of data received from the sensing device, while the first execution screen is displayed through the first display area, the first display area is extended from the first display area to the second and third display areas and then displayed on the display on the basis of the transition from the first state to the third state.

## Description

### [Technical Field]

The disclosure relates to a foldable electronic device and a method of operating a screen thereof.

### [Background Art]

Electronic devices are evolving into structures that extend displays or improving usability thereof, in order to meet the needs of users who desire newer and more diverse functions. For example, a housing structure in which two housings are folded or unfolded along a folding axis may be applied to an electronic device (e.g., foldable electronic device).

A foldable electronic device may have two or more folding axes; thus, a housing and a screen may be divided into three or more sections. For example, the electronic device may include a first folding axis implemented in an in-folding manner, a second folding axis implemented in an out-folding manner, and a display, and a screen of the display may be divided into a first display area, a second display area, and a third display area by the first folding axis and the second folding axis.

The above information is provided as the related art for the purpose of assisting in the understanding of the disclosure. No assertion or determination is made as to whether any of the above description may be applied as the prior art related to the disclosure.

### [Disclosure of Invention]

### [Technical Problem]

A foldable electronic device having at least two folding axes may provide various and improved screen usability to a user, beyond simple extension of a display screen, compared to an electronic device having a bar-type housing structure.

However, the foldable electronic device, despite being capable of providing various extension methods unlike existing devices, provides only uniform usability (or environment) in which a screen size or application content is changed according to a size of a display, regardless of a changed structure of the electronic device.

Embodiments of the disclosure need to support various extension scenarios in a foldable electronic device according to a change in a structure or housing structure of the electronic device. However, the problems to be solved in the disclosure are not limited to the problems mentioned above, and may be extended in various ways without departing from the spirit and scope of the disclosure.

### [Solution to Problem]

According to an embodiment, an electronic device may include a second housing, a first housing foldably coupled to one side of the second housing, and a third housing foldably coupled to the other side of the second housing.

According to an embodiment, an electronic device may include a display including a first display area disposed in the first housing, a second display area disposed in the second housing, and a third display area disposed in the third housing.

According to an embodiment, an electronic device may include a sensing device configured to detect a folding or unfolding state of the first housing, the second housing, and the third housing.

According to an embodiment, an electronic device may include a memory configured to store executable instructions and the processor.

According to an embodiment, the instructions, when executed by the processor, may cause the electronic device to display a first execution screen on the display through a first display area in a first state in which the first housing, the second housing, and the third housing are folded relative to each other.

According to an embodiment, the instructions may cause the electronic device to deactivate a first display area and display a second execution screen on the display through the second display area and the third display area, in the case that the electronic device recognizes, based on data received from a sensing device, that a first state has switched to a second state in which the first housing and the second housing are folded and in which the second housing and the third housing are unfolded, while a first execution screen is displayed through the first display area in the first state.

According to an embodiment, the instructions may cause the electronic device to display a first execution screen by extending the first execution screen from a first display area to a second display area and a third display area, in the case that the electronic device recognizes, based on data received from a sensing device, that a first state has switched to a third state in which the first housing, the second housing, and the third housing are all unfolded, while the first execution screen is displayed through the first display area in the first state.

According to an embodiment, a method of operating a screen of a foldable electronic device may include displaying a first execution screen on a display through a first display area in a first state in which a first housing, a second housing, and a third housing are folded relative to each other.

According to an embodiment, a method of operating a screen of a foldable electronic device may include deactivating a first display area and displaying a second execution screen on a display through a second display area and a third display area, in the case that the electronic device recognizes, based on data received from a sensing device, that a first state has switched to a second state in which the first housing and the second housing are folded and in which the second housing and the third housing are unfolded, while a first execution screen is displayed through the first display area in the first state.

According to an embodiment, a method of operating a screen of a foldable electronic device may include displaying a first execution screen on a display through a first display area, a second display area, and a third display area, in the case that the electronic device recognizes, based on data received from a sensing device, that the first state has switched to a third state in which the first housing, the second housing, and the third housing are all unfolded, while the first execution screen is displayed through the first display area in the first state.

An electronic device of the disclosure may include a computer readable recording medium having recorded thereon a program for implementing various methods of screen operation in a foldable electronic device.

### [Advantageous Effects of Invention]

Various embodiments can provide an electronic device with improved usability by supporting various extension scenarios according to an electronic device state or a housing structure state in a foldable electronic device.

Various embodiments can provide convenience for more efficient use of multi-folding.

Further, effects that may be obtained or expected by various embodiments of this document can be disclosed directly or implicitly in the detailed description of the embodiments of this document.

### [Brief Description of Drawings]

FIG. 1 is a block diagram illustrating an electronic device within a network environment according to an embodiment.
FIGS. 2A to 2D illustrate a structure of a foldable electronic device according to an embodiment.
FIG. 3 is a block diagram illustrating an electronic device according to an embodiment.
FIG. 4 is a diagram illustrating a module configuration of an electronic device according to an embodiment.
FIG. 5 is a diagram illustrating operations for differently operating a screen extension scenario based on a structural state of a foldable electronic device according to an embodiment.
FIG. 6 is a flowchart illustrating a method of operating a screen of a foldable electronic device according to an embodiment.
FIGS. 7A to 7C illustrate examples of screens in an order in which an electronic device changes from a first state to a second state and from the second state to a third state according to an embodiment.
FIG. 8 illustrates an example of a screen in an order in which an electronic device changes from a first state to a third state.
FIG. 9 is a screen example illustrating a method of operating extension of a screen of an electronic device according to an embodiment.
FIGS. 10A and 10B illustrate screen examples that provide grouped application information according to a state of an electronic device according to an embodiment.

### [Mode for the Invention]

Hereinafter, the embodiments of the disclosure will be described in detail with reference to the drawings, so that those skilled in the art may easily implement the disclosure. However, the disclosure may be implemented in various different forms and is not limited to the embodiments described herein. In connection with the description of the drawings, the same or similar reference numerals may be used for the same or similar components. Further, in the drawings and related descriptions, descriptions of well-known functions and constitutions may be omitted for clarity and conciseness.

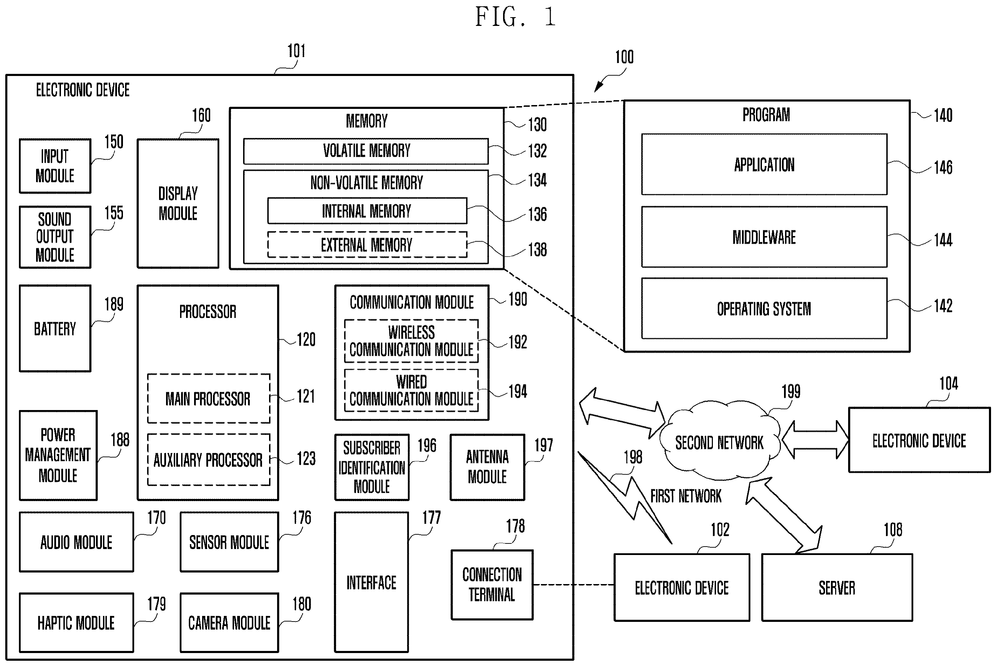

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device according to embodiments disclosed in this document may be implemented in various forms. The electronic device may include, for example, a portable communication device (e.g., smartphone), a computer device, a portable multimedia device, a portable medical device, a camera, a wearable device, or a home appliance. The electronic device according to embodiments of this document is not limited to the above-described devices.

Hereinafter, the term "state" may refer to a structural form or shape of an electronic device or a component (e.g., display, foldable housing structure) thereof according to an embodiment of the disclosure.

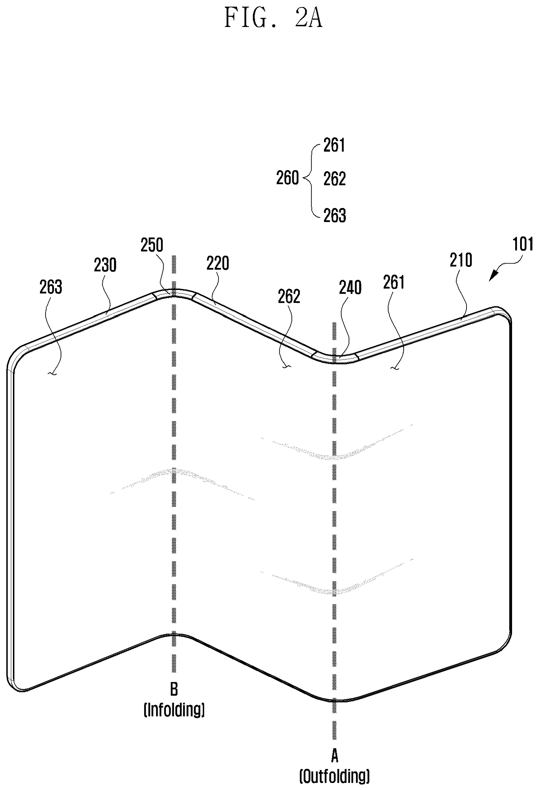

FIGS. 2A to 2D illustrate a structure of a foldable electronic device according to an embodiment.

With reference to FIGS. 2A to 2D, an electronic device (e.g., the electronic device 101 of FIG. 1) according to an embodiment may be implemented as a multi-foldable electronic device (e.g., Z-shaped foldable device) including a housing structure of an out-folding manner and an in-folding manner. An electronic device 101 illustrated in FIGS. 2A to 2D may include the constitution and function of the electronic device 101 of FIG. 1.

The electronic device 101 according to an embodiment may include a first housing 210, a second housing 220, a third housing 230, a first hinge assembly 240, and a second hinge assembly 250. The first hinge assembly 240 may be configured to couple the first housing 210 and the second housing 220 and allow the first housing 210 to rotate relative to the second housing 220. The second hinge assembly 250 may be configured to couple the second housing 220 and the third housing 230 and allow the third housing 230 to rotate relative to the second housing 220. For example, the first hinge assembly 240 may be implemented to couple the first housing 210 and the second housing 220 in an out-folding manner, and the second hinge assembly 250 may be implemented to couple the second housing 220 and the third housing 230 in an in-folding manner.

According to an embodiment, the electronic device 101 may include a display 260 disposed within a space formed by the first housing 210, the second housing 220, and the third housing 230. The display 260 may be disposed to extend from the first housing 210 to the first hinge assembly 240, the second housing 220, the second hinge assembly 250, and the third housing 230. For example, in this document, a first surface on which the display 260 is disposed may be defined as a front surface, and a second surface, which is opposite to the first surface and on which the display 260 is not disposed, may be defined as a rear surface. Further, a third surface surrounding a space between the first surface and the second surface may be defined as a side surface of the electronic device 101.

The display 260 may be flexible at least in part and be implemented as a flexible display.

For example, the display 260 may include a first display area 261 positioned in the first housing 210, a second display area 262 positioned in the second housing 220, and a third display area 263 positioned in the third housing 230.

For another example, the display 260 may be implemented as a first display positioned in the first housing 210 and a second display positioned from the second housing 220 to the second hinge assembly 250 and the third housing 230.

As another example, the display 260 may be implemented as a first display positioned in the first housing 210, a second display positioned in the second housing 220, and a third display positioned in the third housing 230.

The first hinge assembly 240 may be implemented in an out-folding manner in which the first housing 210 and the second housing 220 are folded about a first folding axis A such that the first display area 261 and the second display area 262 face in opposite directions. The second hinge assembly 250 may be implemented in an in-folding manner in which the second housing 220 and the third housing 230 are folded about a second folding axis B such that the second display area 262 and the third display area 263 face each other.

A structure of FIG. 2A may be in an intermediate state in a process in which the housings 210, 220, and 230 of the electronic device 101 are all switched from a folding state to an unfolding state.

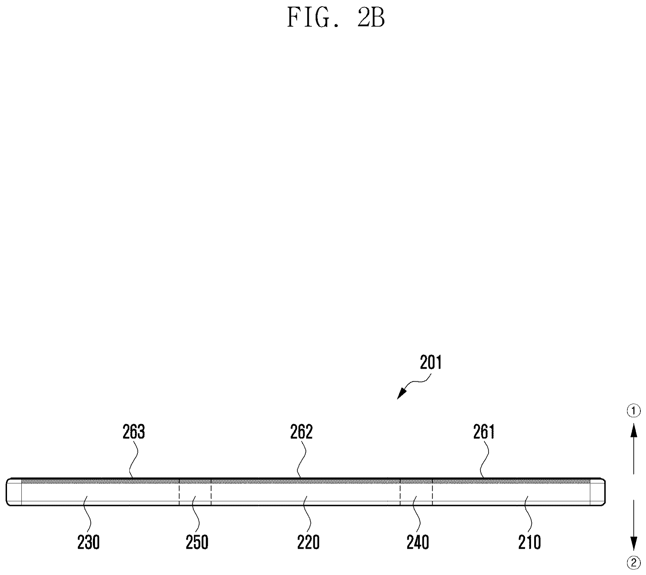

A structure of FIG. 2B may be in a state in which the housings 210, 220, and 230 of the electronic device 101 are all unfolded. In the structure of FIG. 2B, the display areas 261, 262, and 263 of the display 260 may be all exposed to the outside in a first direction ① (or top direction). In this document, the first direction ① may refer to a direction in which a user views the display, and a second direction ② (or bottom direction) may refer to a direction opposite to the first direction ①.

As illustrated in FIG. 2A or 2B, in the case that all of the housings 210, 220, and 230 of the electronic device 101 are in an intermediate state or in an unfolded state, an active area may be determined as the first display area 261, the second display area 262, and the third display area 263.

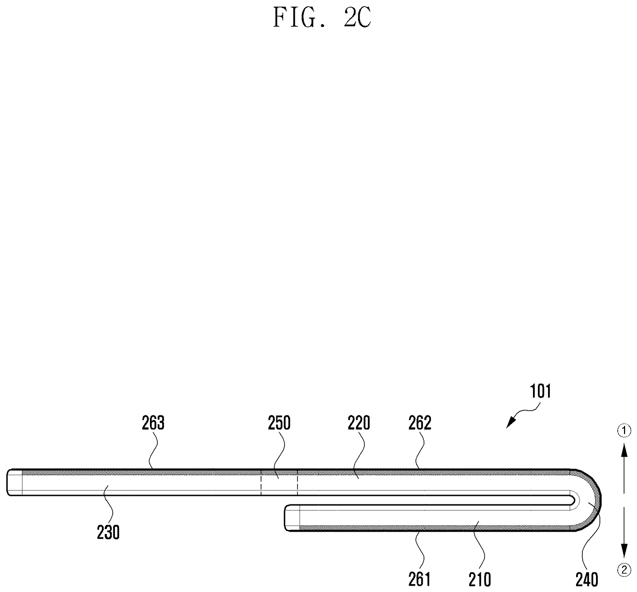

A structure of FIG. 2C may be in a state in which the second housing 220 and the third housing 230 are unfolded and in which the first housing 210 is out-folded with respect to the second housing 220. When the structure of FIG. 2B is switched to the structure of FIG. 2C, the first display area 261 may be switched from the first direction ① to the second direction ②, and the second display area 262 and the third display area 263 may be exposed to the outside in the first direction ①. As illustrated in FIG. 2C, in the case that the first housing 210 is in an out-folded state with respect to the second housing 220 and that the third housing 230 is in an intermediate state or an unfolded state with respect to the second housing 220, the active area may be determined as the second display area 262 and the third display area 263, and the first display area 261 may be switched to a deactivated state (e.g., a screen-off state by stopping power supply to the first display area 261, a dimming state, a power-saving state, or a touch detection blocking state).

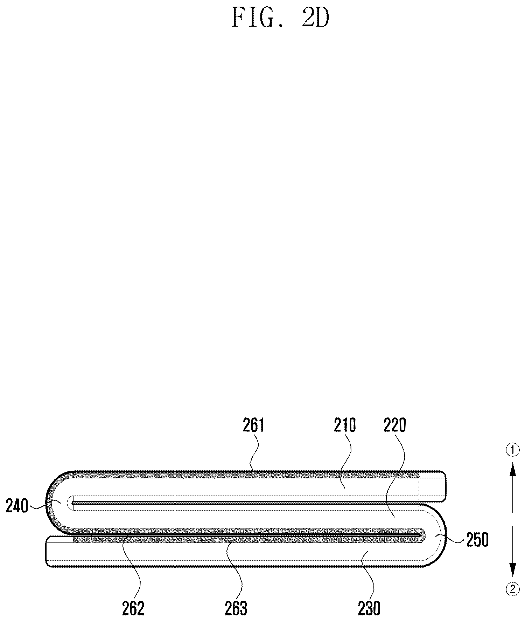

A structure of FIG. 2D may be in a state in which the housings 210, 220, and 230 of the electronic device 101 are all folded. In the structure of FIG. 2D, the first display area 261 may be exposed to the outside in the first direction ①, and the second display area 262 and the third display area 263 may face each other without being exposed to the outside. In the structure of FIG. 2D, the first display area 261 may be determined as an active area, and the second display area 262 and the third display area 263 may be switched to a deactivated state (e.g., a screen-off state by stopping power supply to the second display area 262 and the third display area 263, a dimming state, a power-saving state, a sleep mode, or a touch detection blocking state).

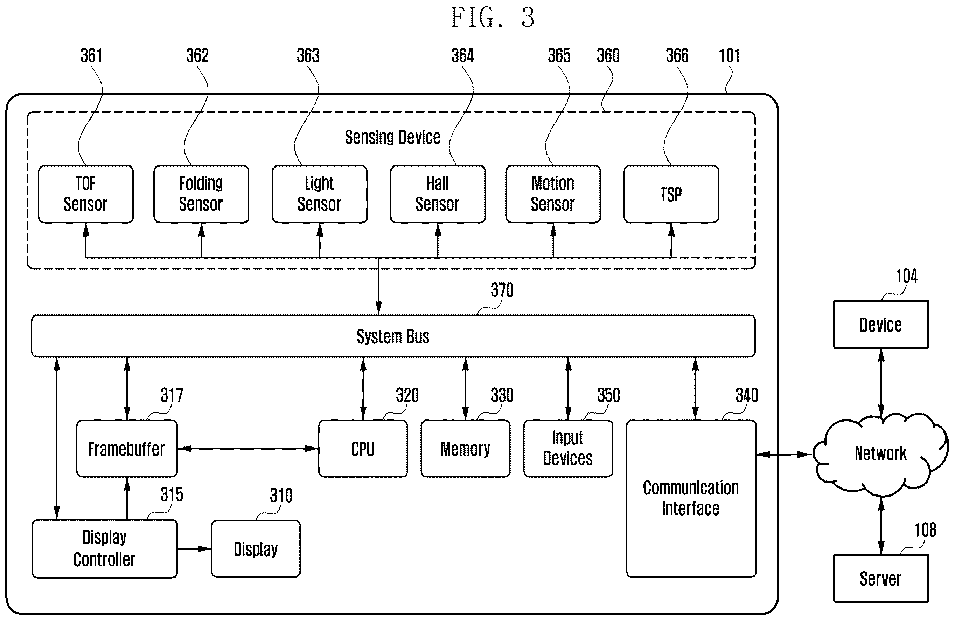

FIG. 3 is a block diagram illustrating an electronic device according to an embodiment.

With reference to FIG. 3, an electronic device (e.g., the electronic device 101 of FIG. 1, the electronic device 101 of FIGS. 2A to 2D) according to an embodiment is a portable electronic device and may have a housing structure of the multi-foldable electronic device of FIG. 2. An electronic device 101 illustrated in FIG. 3 may include at least some of constitutions and functions of the electronic device 101 of FIG. 1.

For example, the electronic device 101 may include a display 310, a display controller 315, a frame buffer 317, a processor (e.g., a central processor (CPU)) 320, a memory 330, a communication interface 340, an input device 350, and a sensing device 360.

The display 310, the processor 320 (e.g., CPU), the memory 330, the communication interface 340, the input device 350, the sensing device 360, the other electronic device 104, and the server device 108 are implemented in substantially the same manner as the display module 160, the processor 120, the memory 130, the communication module 190, the input module 150, the sensor module 176, the other electronic device 104, and the server device 108 of FIG. 1, respectively, so that they may perform the same functions; thus, a redundant description of functions thereof will be omitted, and hereinafter, operations other than the constitutions and functions disclosed in FIG. 1 will be described. The components illustrated in FIG. 3 or FIG. 1 may transmit and receive (or communicate, exchange) data with each other through a system bus 370.

The display controller 315 (e.g., display driver IC (DDI)) controls the display 310 and may receive, for example, video information (e.g., video data, or an video control signal corresponding to a command for controlling the video data) from another component of the electronic device 101. For example, video information may be received from the central processor or processor 320 (e.g., the main processor or the application processor of FIG. 1) or an auxiliary processor (e.g., the auxiliary processor 123 of FIG. 1) (e.g., graphics processor)). The display controller 315 may communicate with the sensing device 360 via the system bus 370. The display controller 315 may store at least a portion of video information in the frame buffer 317 or the memory 330, for example, in units of frames.

The display controller 315 may control the display to output visual information to the display based on video information. The visual information may include graphics, text, icons, videos, images, and combinations thereof.

According to an embodiment, the electronic device 101 may control driving of the display 310 through a plurality of display controllers (e.g., display driver ICs (DDIs)). For example, in the case that the display 310 is implemented as a first display and a second display, the electronic device 101 may control the first display through a first DDI, and control the second display through a second DDI. For another example, in the case that the display 310 includes a first display area 261, a second display area 262, and a third display area 263, as illustrated in FIGS. 2A to 2D, the electronic device 101 may be implemented to control the first display area 261 through the first DDI, and to control the second display area 262 and the third display area 263 through the second DDI.

The sensing device 360 may include sensors for generating data necessary for determining a folding/unfolding angle between the housings 210, 220, and 230 illustrated in FIGS. 2A to 2D and an electronic device state (or housing structure state), and movement information (e.g., direction, posture, or position) of the electronic device. For example, the sensing device may include a time of flight (TOF) sensor 361, a folding sensor 362, a light sensor 363, a Hall sensor 364, a motion sensor 365, and a touch screen panel (TSP) sensor 366, but these are only examples, and some thereof may be omitted, or may include other sensors for determining the electronic device state (or housing structure state) or the movement of the electronic device 101 in addition to the illustrated sensors.

According to an embodiment, the sensing device 360 may sense an angle (e.g., folding angle) between the housings 210, 220, and 230 using the Hall sensor 364 and/or the folding sensor 362, and deliver sensed angle information to the processor 320.

According to an embodiment, the folding sensor 362 may calculate an angle of the housings 210, 220, and 230. For example, in the case that the electronic device 101 is implemented as the multi-foldable housing structures 210, 220, and 230 of FIGS. 2A to 2D, the folding sensor 362 may calculate an angle between the housings using data representing the movement of the first housing 210, the second housing 220, or the third housing 230. The folding sensor 362 may receive data corresponding to the strength of a magnetic field from the Hall sensor 364 attached to the hinge assembly, and calculate an angle using the received data.

The folding sensor 362 may recognize a structural state of the electronic device 101 or a housing structural state (e.g., unfolded state, folded state, or intermediate state) based on the calculated angle. For example, the folding sensor 362 may determine the electronic device (or the housing structure) state as a folded state in the case that the calculated angle is between about 0 degrees and about 10 degrees, and determine the electronic device (or the housing structure) state as an unfolded state in the case that the calculated angle is about 180 degrees. The folding sensor 362 may determine the electronic device (or the housing structure) state as an intermediate state in the case that the angle is between about 10 degrees and about 179 degrees.

According to an embodiment, the Hall sensor 364 may generate data used for calculating a direction in which a force is applied to the housing structure and/or an angle between the housing structures or determining whether the housing structure is open or closed, and output the data to the folding sensor 362 or the processor 320. For example, the Hall sensor 364 may measure the strength of a magnetic field and generate data corresponding to the measured magnetic field strength. The Hall sensor 364 may be attached to the hinge assembly or disposed in an internal space of the housing.

For example, in the case that the electronic device 101 is implemented as the multi-foldable housing structures 210, 220, and 230 of FIGS. 2A to 2D, the Hall sensor 364 may include a first Hall sensor attached to the first hinge assembly 240 and a second Hall sensor attached to the second hinge assembly 250. The processor 320 may determine an angle between the housings based on data received from the Hall sensor 364. The processor 320 may determine whether the foldable housing structure is open or closed and a state thereof based on the determined angle.

The memory 330 may store various instructions that may be executed by the processor 320. Such instructions may include arithmetic and logical operations, data movement, or control commands such as input/output that may be recognized by the processor 320.

The processor 320 may be operatively, functionally, and/or electrically connected to each component of the electronic device 101 and be a component that may perform computation or data processing related to control and/or communication of each component.

In an embodiment, the hardware of the electronic device 101 being operatively connected may mean that a direct or indirect connection, either wired or wireless, is established between hardware components, such that second hardware is controlled by first hardware among them.

There is no limitation on computation and data processing functions that the processor 320 may implement on the electronic device 101, but hereinafter, operations that provide various screen extension scenarios according to changes in the electronic device structure state or housing structure in a foldable electronic device will be described.

Operations of the processor 320 to be described later may be performed by loading instructions stored in the memory 330.

The electronic device 101 according to an embodiment may include a second housing 220, a first housing 210 foldably coupled to one side of the second housing 220, and a third housing 230 foldably coupled to the other side of the second housing 220.

The electronic device 101 according to an embodiment may include displays 260 and 310 including a first display area 261 disposed in the first housing 210, a second display area 262 disposed in the second housing 220, and a third display area 263 disposed in the third housing 230.

The electronic device 101 according to an embodiment may include a sensing device 360 for detecting a folding or unfolding state of the first housing 210, the second housing 220, and the third housing 230.

The electronic device 101 according to an embodiment may include memories 130 and 330 that store executable instructions and processors 120 and 320 that access the memories 130 and 330 and execute the instructions.

According to an embodiment, the processors 120 and 320 may be configured to display a first execution screen on the display using a first display area in a first state in which the first housing 210, the second housing 220, and the third housing 230 are folded relative to each other.

According to an embodiment, while the first execution screen is displayed through the first display area 261 in the first state, in the case that the processors 120 and 320 recognize, based on data received from the sensing device 360, that the first state has switched to a second state in which the first housing 210 and the second housing 220 are folded and the second housing 220 and the third housing 230 are unfolded, the processors 120 and 320 may be configured to deactivate the first display area 261 and display a second execution screen on the display through the second display area 262 and the third display area 263.

According to an embodiment, while the first execution screen is displayed through the first display area 261 in the first state, in the case that the processors 120 and 320 recognize, based on data received from the sensing device 360, that the first state has switched to a third state in which the first housing 210, the second housing 220, and the third housing 230 are all unfolded, the processors 120 and 320 may be configured to display the first execution screen on the display by extending the first execution screen from the first display area 261 to the second display area 262 and the third display area 263.

The second execution screen may be characterized as being a different screen from the first execution screen.

The electronic device 101 according to an embodiment may further include a first hinge assembly 240 configured such that the first housing 210 is folded in a first direction relative to the second housing 220, and a second hinge assembly 250 configured such that the third housing is folded in a second direction opposite to the first direction relative to the second housing.

According to an embodiment, the first hinge assembly 240 may be implemented such that the first display area and the second display area are opposite to each other when the first housing 210 and the second housing 220 are folded in an out-folding manner, and the second hinge assembly 250 may be implemented such that the second display area and the third display area face each other when the second housing 220 and the third housing 230 are folded in an in-folding manner.

According to an embodiment, the displays 260 and 310 may include a first display including a first display area 261 disposed in the first housing 210, and a second display including a second display area 262 disposed in the second housing 220 and a third display area 263 disposed in the third housing 230.

According to an embodiment, the displays 260 and 310 may include a first display including a first display area 261 disposed in the first housing 210, a second display including a second display area 262 disposed in the second housing 220, and a third display including a third display area 263 disposed in the third housing 230.

According to an embodiment, the first state may be a state in which the first display area 261 is exposed to the outside in the first direction, and the second state may be a state in which the first display area is switched in a second direction opposite to the first direction and in which the second display area 262 and the third display area 263 are exposed to the outside in the first direction.

According to an embodiment, the processors 120 and 320 may, as an operation of deactivating the first display area 261 and displaying the second execution screen through the second display area 262 and the third display area 263, be further configured to display a preview window corresponding to the first execution screen displayed through the first display area 261 on at least a portion of the second display area 262 and the third display area 263 in the first state.

According to an embodiment, the processors 120 and 320 may be configured to display a preview window corresponding to the first execution screen in the form of a notification state window (notification bar or panel) or a picture in picture (PIP) pop-up.

According to an embodiment, while the processors 120 and 320 deactivate the first display area 261 and display the second execution screen through the second display area 262 and the third display area 263 in the second state, and in the case of recognizing, based on data received from the sensing device, that the second state has switched to the third state in which the housings are all unfolded, the processors 120 and 320 may be configured to display the first execution screen through the first display area 261 and display the second execution screen through the second display area 262 and the third display area 263.

According to an embodiment, the processors 120 and 320 may be configured to group, by electronic device state, and store information on apps (or applications, hereinafter, App) executed in the first state, information on apps executed in the second state, and information on apps executed in the third state.

According to an embodiment, the processors 120 and 320 may, as an operation of displaying the first execution screen on the first display area 261 and the second execution screen on the second display area 262 and the third display area 263, be further configured to display a home screen or a recent task list as the first execution screen while maintaining the second execution screen, in the case that there is no application related to the first display area 261 and that an application related to the second execution screen is initialized or restarted upon a change in resolution.

According to an embodiment, the processors 120 and 320 may, as an operation of displaying the first execution screen on the first display area 261 and displaying the second execution screen on the second display area 262 and the third display area 263 in the third state, be further configured to omit display of the first execution screen and to resize and display the second execution screen in a size corresponding to the first display area 261, the second display area 262, and the third display area 263, in the case that there is no application related to the first display area 261 and that an application related to the second execution screen is not initialized or restarted upon a change in resolution.

According to an embodiment, the home screen or the recent task list displayed on the first display area may be configured to display, overlapping an app object, at least one of a first type indicator that guides an executable electronic device state for each app object, or a second type indicator that guides that the app may be restarted or initialized when switching from a background to a foreground.

According to an embodiment, the processors 120 and 320 may be configured to display applications executed in an electronic device state different from a currently recognized electronic device state in a grouped form when displaying a recent task list on the display.

According to an embodiment, the processors 120 and 320 may be configured to reconstitute a widget screen or recent app search screen with information on apps executed in a currently recognized electronic device state or housing structure state and display the reconstructed widget screen or recent app search screen on the display when displaying the widget screen or recent app search screen on the display.

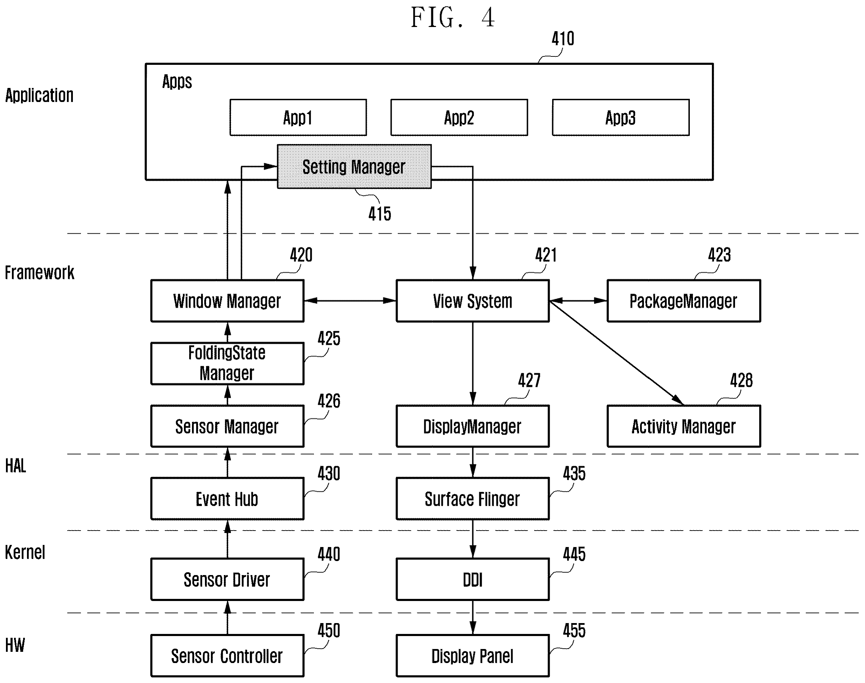

FIG. 4 is a diagram illustrating a module configuration of an electronic device according to an embodiment.

With reference to FIG. 4, the electronic device (e.g., the electronic device 101 of FIG. 1, FIG. 2A to FIG. 2D, and FIG. 3) according to an embodiment may be composed of various software modules. A configuration of an electronic device 101 illustrated in FIG. 4 may be understood as a function performed by a processor (e.g., the processor 120 of FIG. 1 or the processor 320 of FIG. 3) (or CPU). The processor 120 may execute instructions stored in a memory (e.g., the memory 130 of FIG. 1, the memory 330 of FIG. 3) so as to implement a software module, and control hardware (e.g., the communication module 180 of FIG. 1) associated with the function.

Some of the modules in FIG. 4 may be implemented in hardware, while others may be implemented in software. The modules may be classified into an application layer, a framework layer, a hardware abstraction layer (HAL), a kernel driver layer, and/or a hardware (HW) layer, and at least some of the illustrated components may be changed.

The electronic device 101 may include at least one of an application 410, a setting manager 415, a window manager 420, a view system 421, a package manager 423, a folding state manager 425, a sensor manager 426, a display manager 427, an activity manager 428, an event hub 430, a surface flinger 435, a sensor driver 440, or a display controller 445 (e.g., display driver IC controller). The electronic device 101 may further include a sensor controller 450 and a display panel 455 in the hardware layer.

The application 410 may be an application 210 (e.g., app1, app2, app3) stored in the memory of the electronic device 101 or executable or installed by the processor. Visual information corresponding to the application 210 may be displayed on the display through the view system 421.

The setting manager 415 may determine a layout configuration of the execution screen according to the system policy and the user's configuration.

The framework layer may provide various functions to the application 210 so that functions or information provided from one or more resources of the electronic device may be used by the application 410.

The window manager 420 may manage graphic user interface (GUI) resources using on the screen. The window manager 420 may constitute a window or execution screen to be displayed on the display panel 455 based on the electronic device state (or housing structure state) delivered from the folding state manager 425, and provide a function of controlling drawing and viewing for the window. The window manager 420 may deliver information on the display area of the electronic device 101 to the application 410.

The view system 421 may include a set of scalable views used for creating an application user interface. For example, the view system 421 may be a program for drawing at least one layer based on the resolution of the display area of the display.

The package manager 423 may manage the installation of application packages, or, more simply, applications.

The folding state manager 425 may analyze sensor events delivered through the sensor manager to determine the electronic device state (or housing structure state) and deliver electronic device structure state information to the window manager 420. The folding state manager 425 may control the application state according to the electronic device structure state.

The sensor manager 426 may control the sensor based on the configuration of the application 410. For example, in that case that a user's touch input occurs, the sensor manager 426 may control the touch sensor to generate touch data. For example, the sensor manager 426 may instruct the sensor to generate touch data corresponding to a touch press (touch press, touch down, touch contact) signal, a touch drag (touch drag or touch movement) signal, and/or a touch release (touch up, touch release) signal in response to the user's touch.

The display manager 427 may determine whether to activate or deactivate the display, manage visual information displayed on the display, and define an execution screen (or window) (e.g., as a component at a frame level, which may be referred to as a logical display screen) viewed to the user based on information delivered from the view system.

The activity manager 428 may control a lifecycle and activity stack of the application 410.

The event hub 430 may be an interface module that standardizes events occurring in touch circuits and sensors. The event hub 430 may be included in an abstraction layer (hardware abstraction layer (HAL)) between a plurality of hardware modules included in the hardware layer and software of the electronic device 101.

The surface flinger 435 may synthesize multiple layers and store synthesized information in a frame buffer. For example, the surface flinger 435 may provide data representing the synthesized multiple layers to the display controller 445 (e.g., DDI). The display controller 445 may refer to a graphic display controller or a display driving circuit controller.

The kernel layer may include various drivers for controlling various hardware modules included in the electronic device 101. For example, the kernel layer may include, but is not limited to, the sensor driver 440 for controlling the sensor controller 450 connected to a sensor, and the display controller 445 for controlling the display panel 455.

The sensor driver 440 may connect the operating system and the sensor, and include information on a driving method, feature, and/or function of the sensor. The sensor driver 440 may include an interface module that controls the sensor controller 450 connected to the sensor.

The display controller 445 may receive data representing multiple layers synthesized by the surface flinger 435. The display controller 445 may control the display panel 455 based on data stored in the frame buffer. Graphic information may be displayed through the display panel 455.

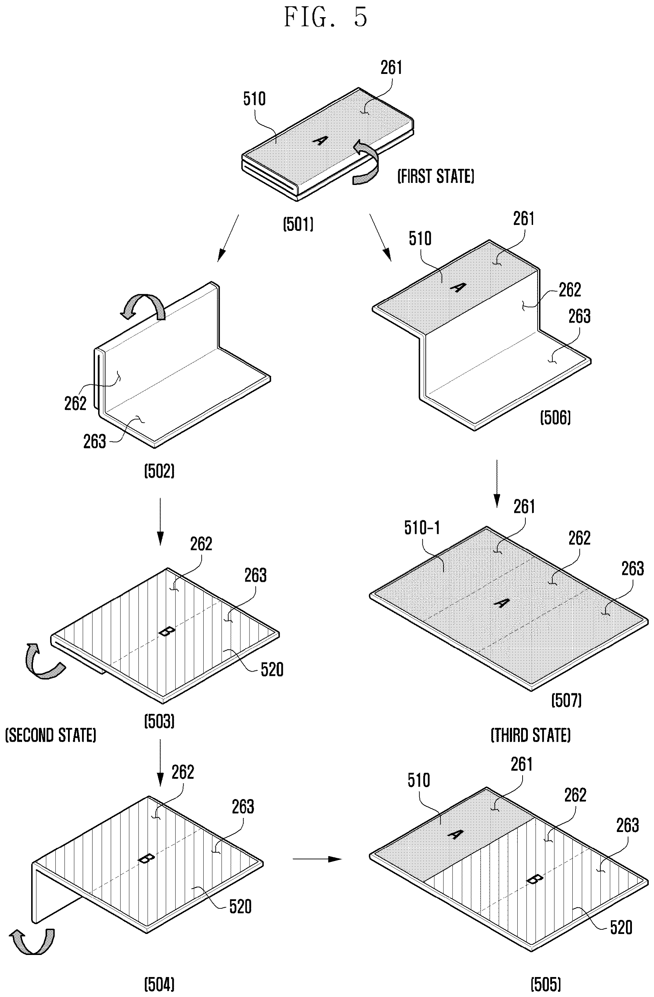

FIG. 5 is a diagram illustrating operations for differently operating a screen extension scenario based on a state of a foldable electronic device of an out-folding manner and an in-folding manner according to an embodiment. In the following drawings, a housing in which the first display area 261 is disposed may be understood as the first housing 210 in FIGS. 2A to 2D, a housing in which the second display area 262 is disposed may be understood as the second housing 220, and a housing in which the third display area 263 is disposed may be understood as the third housing 230.

With reference to FIG. 5, according to an embodiment, the electronic device 101 may support a function of differently applying a screen extension sequence according to an unfolding order or state change order of a multi-housing structure.

As illustrated in <501>, the electronic device may be switched from a first state in which the housings 210, 220, and 230 are all folded to a second state of <503>, and then to a third state of <505>, or may be switched directly from the first state to a third state of <507>.

In the first state, the electronic device 101 may determine the first display area 261 positioned in the first housing 210 as an active area and display a first execution screen 510 on the first display area 261. The electronic device 101 may render the first execution screen 510 to a size corresponding to the first display area (hereinafter, a first size or a first resolution). In the first state, the second display area 262 and the third display area 263 may be deactivated (e.g., a screen-off state by stopping power supply, a dimming state, a power-saving state, or a sleep mode).

In some cases, when the electronic device 101 is in the first state, the first display area may also be operated in a sleep mode in which it is deactivated.

As a first screen operation method, the electronic device 101 may be changed from the first state of <501> to the second state of <503> through an intermediate state of <502>. The electronic device 101 may recognize that the first state is changed (or switched) to the second state based on data received from the sensing device of <503> (e.g., the sensor module 176 of FIG. 1, the sensing device 360 of FIG. 3). Based on recognition of the second state of <503>, the electronic device 101 may switch the first display area 261 to be deactivated and determine the second display area 262 and the third display area 263 as active areas. The electronic device 101 may display a second execution screen 520 on the second display area 262 and the third display area 263 in the second state.

The second execution screen 520 may refer to a screen defined through a layer/window different from the first execution screen 510. The second execution screen 520 may be rendered according to a size (hereinafter, a second size or a second resolution) corresponding to the second display area and the third display area.

After being changed to the second state of <503>, the electronic device may be changed from an intermediate state of <504> to a third state of <505>. The electronic device 101 may recognize that the second state has changed to the third state based on data received from the sensing device, determine the first display area 261 as an active area based on recognition of the third state, and control to display the first execution screen 510 on the first display area 261, and to display the second execution screen 520 on the second display area 262 and the third display area 263.

As a second screen operation method, the electronic device 101 may be changed from the first state of <501> to the third state of <507> through an intermediate state of <506>. The electronic device 101 may recognize the change from the first state to the third state based on data received from the sensing device. Based on the change from the first state of <501> to the third state, the electronic device 101 may determine the second display area 262 and the third display area 263 as active areas, and display a first execution screen 510-1 of the third size (or third resolution) by extending the size of the first execution screen 510 to a size suitable for the first display area 261, the second display area 262, and the third display area 263. The electronic device 101 may render the first execution screen 510-1 according to the third size or the third resolution.

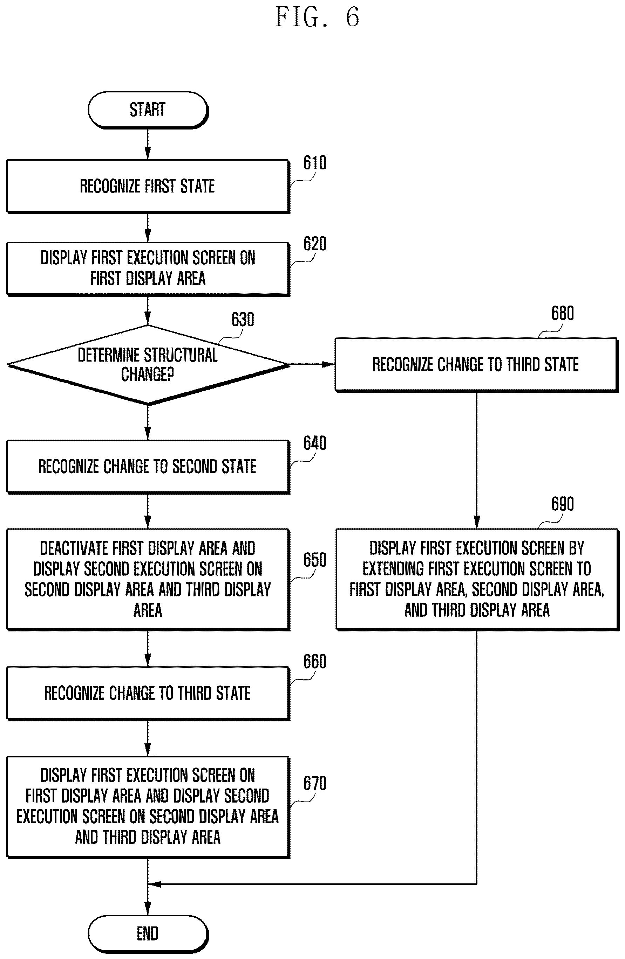

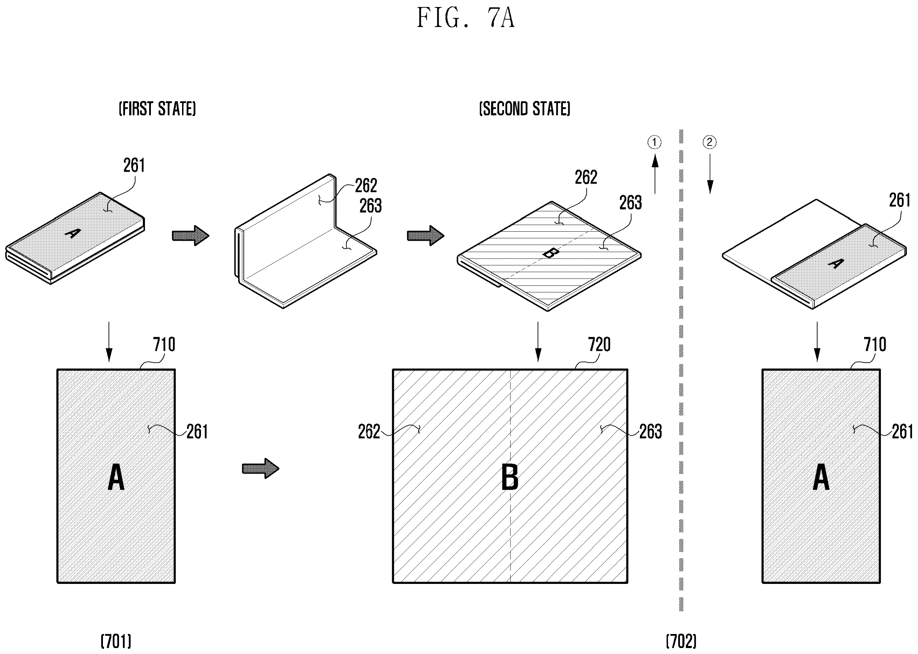

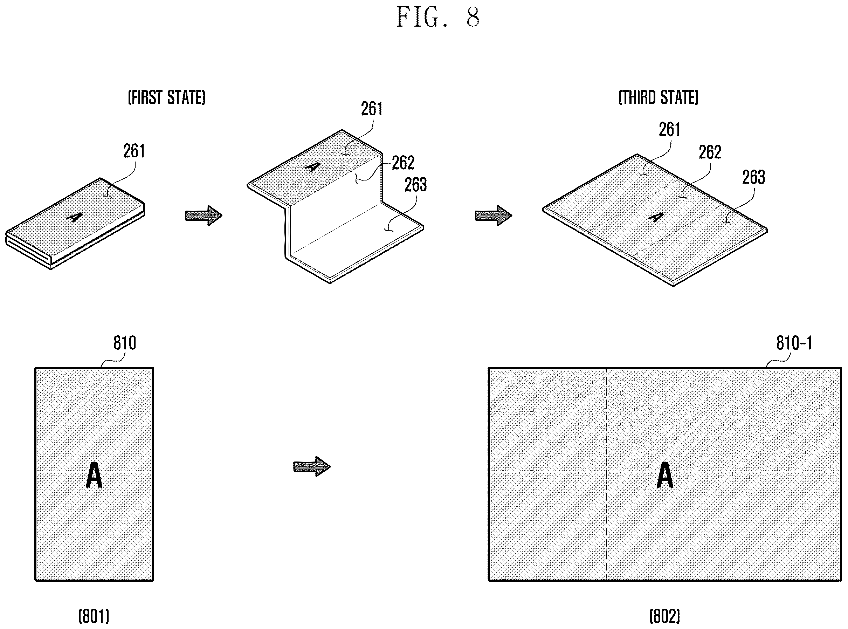

FIG. 6 is a flowchart illustrating a method of operating a screen of a foldable electronic device according to an embodiment. FIGS. 7A to 7C illustrate screen examples of the order in which an electronic device is changed from a first state to a second state and from the second state to a third state according to an embodiment, and FIG. 8 illustrates a screen example of the order in which an electronic device is changed from a first state to a third state. In FIGS. 7A to 7C, a first direction ① may mean a direction in which the user views the display, and a second direction (② or bottom direction) may mean a direction opposite to the first direction ①.

In the following embodiments, each operation may be performed sequentially, but is not necessarily performed sequentially. For example, the order of each operation may be changed, and at least two operations may be performed in parallel.

With reference to FIG. 6, a processor (e.g., 120 of FIG. 1, 320 of FIG. 3) of the electronic device 101 according to an embodiment may recognize a first state in which the housings 210, 220, and 230 of the electronic device 101 are all folded based on data received from a sensing device (e.g., the sensor module 176 of FIG. 1, the sensing device 360 of FIG. 3) in operation 610.

In operation 620, the processor 120 may display a first execution screen 710 on the first display area 261 based on the electronic device 101 state or housing structure state being recognized as a first state.

For example, as illustrated in <701>, the first state may be a state in which the first housing 210 and the second housing 220 are out-folded and in which the second housing 220 and the third housing 230 are in-folded. In the first state, the first display area 261 may be exposed in the first direction (e.g., ① of FIG. 2D), and the second display area 262 and the third display area 263 may be positioned to face each other due to an in-folding operation of the second housing 220 and the third housing 230.

The processor 120 may calculate an angle (hereinafter, "first angle") between the first housing 210 in which the first display area 261 is positioned and the second housing 220 in which the second display area 262 is disposed, and an angle (hereinafter, "second angle") between the second housing in which the second display area is disposed and the third housing in which the third display area is disposed based on data received from the sensing device. The processor 120 may recognize a state of the electronic device 101 or a state of the housing structure based on at least one of the first angle or the second angle.

The processor 120 may determine the first display area 261 as an active area based on recognition of the first state, and deactivate the second display area 262 and the third display area 263 (e.g., a screen-off state by stopping power supply to the second display area 262 and the third display area 263 of the display, a dimming state, a power-saving state, or a touch detection blocking state).

For example, the first execution screen 710 is a screen defined according to the first size (or first resolution) of the first display area 261, and may be, for example, a home screen or an application execution screen according to the configuration of the electronic device. For example, the first execution screen 710 may have the first size.

In an embodiment, the first execution screen 710 may be provided as the most recently used application execution screen in the foreground when the electronic device 101 is in the first state, but is not limited thereto.

According to an embodiment, in FIG. 7A, at least a portion of one display is defined as a first display area, but in some cases, the first display area 261 may be implemented as a first display, and the second display area 262 and the third display area 263 may be implemented as a second display. In the case that the electronic device 101 includes a first display and a second display, when the electronic device 101 is in the first state, the first display may be activated, and the second display may be deactivated (e.g., a screen-off state by stopping power supply to the second display or a sleep mode), thereby causing the second display area 262 and the third display area 263 to be deactivated.

In operation 630, the processor 120 may determine a structural change of the electronic device 101 (or a change in the state of the electronic device, a change in the state of the display, a change in the structure of the housing).

For example, the electronic device 101 may be classified into a case that the state of the electronic device 101 or the state of the housing structure changes from a first state to a second state and a case that the state of the electronic device 101 or the state of the housing structure changes from the first state to a third state.

In operation 640, the processor 120 may recognize that the structure of the electronic device 101 or the housing is changed from a first state to a second state.

For example, as illustrated in <702>, the processor 120 may recognize that the first state has changed to the second state based on the second angle being changed to a threshold angle value (e.g., about 170 degrees) or more while the first angle is maintained at about 0 degrees to about 10 degrees (or the second housing 220 and the third housing 230 are changed to an unfolded state while out-folding of the first housing 210 and the second housing 220 is maintained).

In operation 650, the processor 120 may, based on recognition of the second state, deactivate the first display area 261 (e.g., a screen-off state by stopping power supply to at least a part of the display, a dimming state, a power-saving state, or a touch detection blocking state) and determine the second display area 262 and the third display area 263 as active areas. The processor 120 may display a second execution screen 720 on the second display area 262 and the third display area 263 determined as active areas.

The first direction ① of <702> may be a direction in which the second execution screen 720 is exposed, which may be a direction in which the user views the electronic device, and the second direction (2) may be a direction opposite to the first direction ①, which may be a bottom direction in which the user cannot view the electronic device.

The second execution screen 720 may refer to a screen defined through a layer/window different from the first execution screen 710. The second execution screen 720 may be a home screen or an application execution screen. The second execution screen 720 may have a second size or second resolution including a second display area 262 and a third display area 263.

In an embodiment, the second execution screen 720 may be provided as the most recently used application execution screen in the foreground when the electronic device 101 is in the second state, but is not limited thereto.

As the first display area 261 whose disposition position is switched from the first direction ① as in <701> to the second direction ② as in <702> is deactivated, entry into a dimming mode and touch detection may be blocked, and an application related to the first execution screen 710 may not be paused and may be executed in the background.

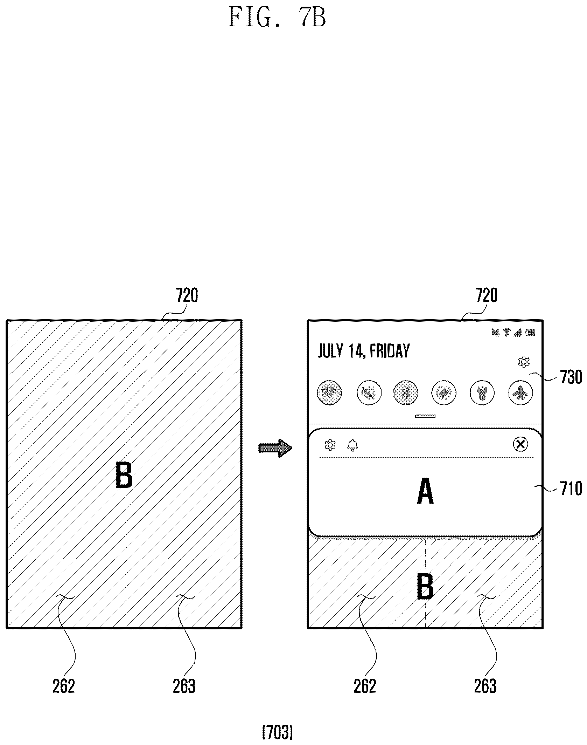

According to an embodiment, the electronic device 101 may support a function of providing a first execution screen as a preview window when the electronic device is in a second state. The preview window may be provided as a part of a notification state window (notification bar or panel), but may also be provided in the form of a pop-up of a picture in picture (PIP). For example, as illustrated in <703> of FIG. 7B, the electronic device 101 may be operated by displaying the second execution screen 720 on the second display area 262 and the third display area 263.

The electronic device 101 may operate the second execution screen 720 in the second state, and call a notification state window 730 by overlapping the notification state window 730 on the second execution screen 720 based on reception of an input requesting display of the first execution screen (e.g., an input requesting display of a notification state window (notification bar or panel) or an input of dragging from a top direction to a bottom direction of the display). The electronic device 101 may provide the first execution screen 710 as a preview window on the notification state window 730. The electronic device 101 may control an application being executed through the first execution screen using the first execution screen 710 provided as a preview window.

According to an embodiment, the electronic device 101 may be configured to maintain a task of an application executed through the first execution screen 710 displayed on the first display area 261 for a preconfigured time period after the first display area is deactivated in the second state, and then terminate the task.

According to some embodiments, in the case that the electronic device 101 recognizes a change from the second state back to the first state, as a display area exposed in the first direction is changed from the second display area 262 and the third display area 263 back to the first display area 261, the electronic device may determine the active area as the first display area 261 and deactivate the second display area 262 and the third display area 263.

In operation 660, the processor 120 may recognize that the structure of the electronic device 101 or the housing is changed from the second state to the third state.

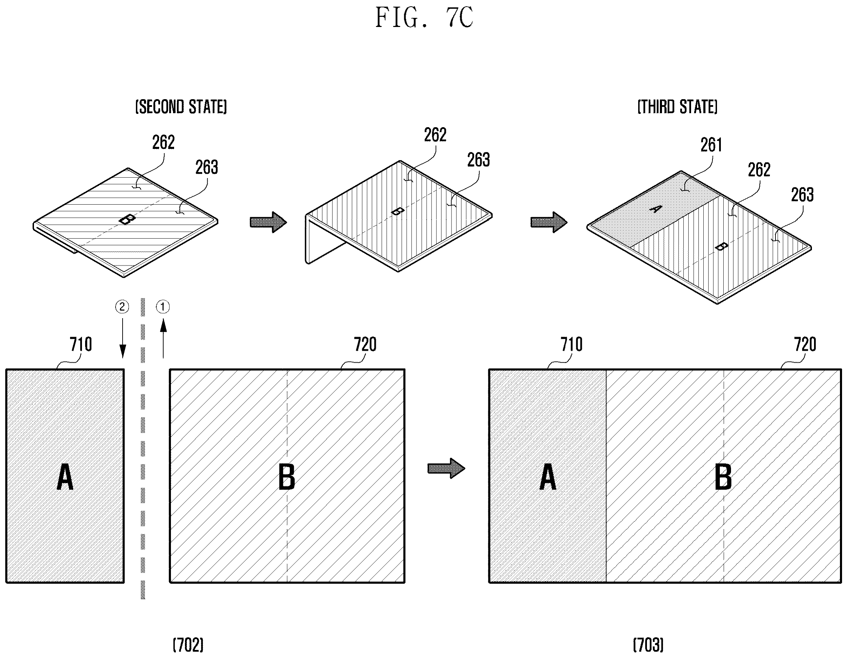

For example, the processor 120 may recognize that the second state has switched to the third state based on the first angle being changed to a threshold angle value (e.g., about 170 degrees) or more while the second angle threshold angle value (e.g., about 170 degrees) or more is maintained (or the second housing 220 and the third housing 230 are recognized as being in an unfolded state, and then the first housing 210 and the second housing 220 are changed to an unfolded state). As illustrated in <702> of FIG. 7C, the processor 120 may recognize, based on data received from the sensing device, that the second housing 220 and the third housing 230 have switched to an unfolded (or intermediate) state while maintaining an out-folded state of the first housing 210 and the second housing 220.

In operation 670, the processor 120 may determine the first display area 261 as an active area based on recognition of the third state, display the first execution screen 710 on the first display area 261, and display the second execution screen 720 on the second display area 262 and the third display area 263.

As illustrated in <703> of FIG. 7C, the processor 120 may display the first execution screen 710 of a first size on the first display area 261, and display the second execution screen 720 of a second size on the second display area 262 and the third display area 263. The first execution screen 710 and the second execution screen 720 may be operated independently of each other. The electronic device 101 may control not only the first execution screen 710 through the first display area 261, but also the second execution screen 720 through the second display area 262 and the third display area 263.

In operation 680, the processor 120 may determine that a change is recognized from the first state to the third state, rather than recognition of the second state. For example, the processor 120 may recognize that both the first angle and the second angle are changed to a threshold angle value (e.g., about 170 degrees) or more (or that the first housing 210, the second housing 220, and the third housing 230 are all changed to an unfolded state).

In operation 690, the processor 120 may determine the first display area 261, the second display area 262, and the third display area 263 as active areas based on recognizing a change from the first state to the third state, and display a first execution screen 810 by extending the first execution screen 810 to a third size according to sizes of the second display area 262 and the third display area 263.

As illustrated in <801> of FIG. 8, the processor 120 may display a first execution screen 810 of a first size on the first display area 261 in a first state in which the housings 210, 220, and 230 of the electronic device 101 are all folded. As illustrated in <802>, the processor 120 may extend the first execution screen 810 to a third size (or third resolution) corresponding to all active areas (e.g., the first display area 261, the second display area 262, and the third display area 263) based on the change from the first state to the third state, and display a first execution screen 810-1 of the third size through the first display area 261, the second display area 262, and the third display area 263.

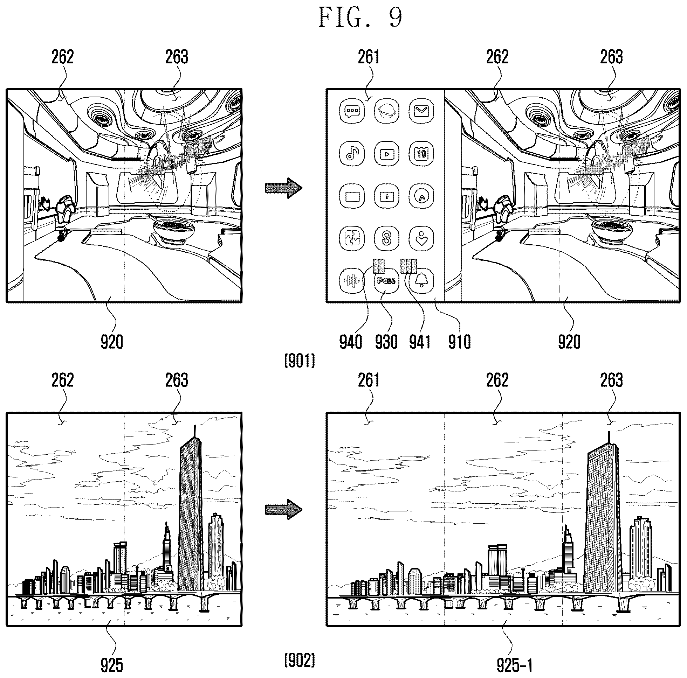

FIG. 9 is a screen example illustrating a method of operating extension of a screen of an electronic device according to an embodiment.

With reference to FIG. 9, when an electronic device 101 according to an embodiment is changed from a first state to a third state or from a second state to a third state, in the case that there is no application executing through the first display area 261 (or there is no execution history of the application through the first display area 261), the electronic device may provide a different extension layout configuration of the screen according to an application resizing feature.

The first display area 261 may be deactivated if there is a history of an application executed through the first display area 261 before it is deactivated, or may be deactivated while the home screen is displayed or the screen is turned off.

According to an embodiment, the processor 120 may determine whether an application executing on the electronic device 101 exists through the first display area 261 (or whether an execution history of the application exists through the first display area).

According to an embodiment, in the case that there is an application executing through the first display area 261, the processor 120 may display a first execution screen 710 on the first display area 261 and display a second execution screen 720 on the second display area 262 and the third display area 263 when changing from the second state to the third state, as illustrated in FIG. 7C.

According to an embodiment, when the electronic device 101 is changed from the second state to the third state, in the case that no application is executed through the first display area 261, the processor 120 may identify, through a second execution screen 920, whether an application being executed has a resizing feature or a feature requiring restart when a screen resolution is changed.

For example, in the case that there is no application executing through the first display area 261 and that an executing application is restarted upon a change in resolution through the second execution screen 920, as illustrated in <901>, the processor 120 may display a second execution screen 920 of a second size through the second display area 262 and the third display area 263, and display a home screen or a recent task list screen as a first execution screen 910 on the first display area 261. In the case of the second execution screen 920, by maintaining the current size/resolution (e.g., second size/second resolution), the processor 120 may not restart the executing application through the second execution screen 920.

In this case, the home screen or recent task list screen may include app objects (e.g., app icons) 930 corresponding to applications executable on the electronic device.

The electronic device may include indicators 940 and 941 that guide an executable electronic device state/housing structure state for each app object or guide the app to be restarted to constitute a home screen or a recent task list screen. The indicators 940 and 941 may be displayed to overlap with at least a portion of the app object. For example, the indicators 940 and 941 may be implemented in a shape or form that guides information on an electronic device state/housing structure state last executed the corresponding application and information on an app being restarted in the case that a task of the corresponding application is started, but this is only an example. The user may easily select an app object suitable for the current electronic device state or housing structure state through indicators included in the home screen or the recent task list screen.

For another example, as illustrated in <902>, in the case that no application is executed through the first display area and that an application executing through a second execution screen 925 does not restart upon a change in resolution, the processor 120 may resize and display the second execution screen 925 from the second size to the third size. The processor 120 may render the second execution screen 925 of the second size to the third size (or third resolution) corresponding to all the display areas 261, 262, and 263, and display a rendered third-size second execution screen 925-1 through the first display area 261, the second display area 262, and the third display area 263.

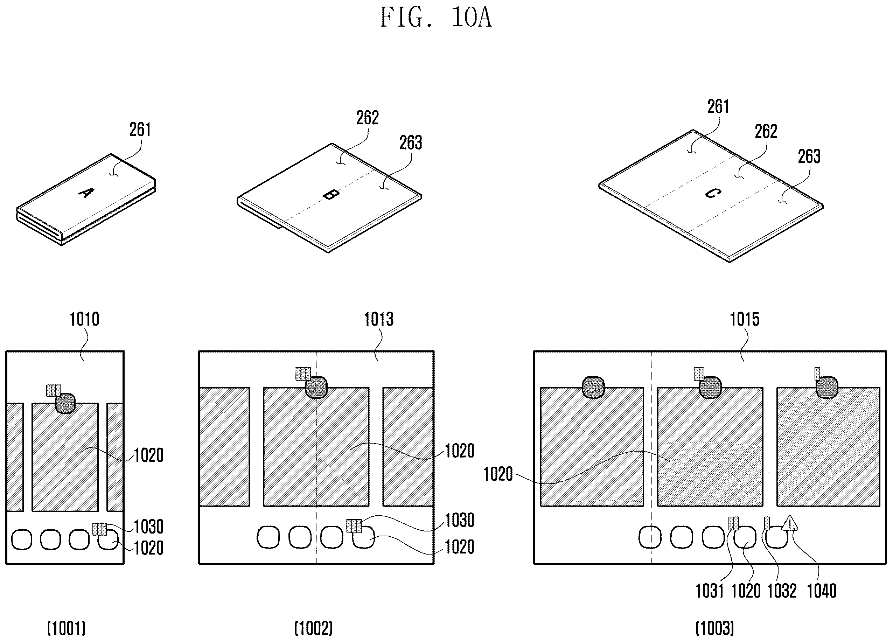

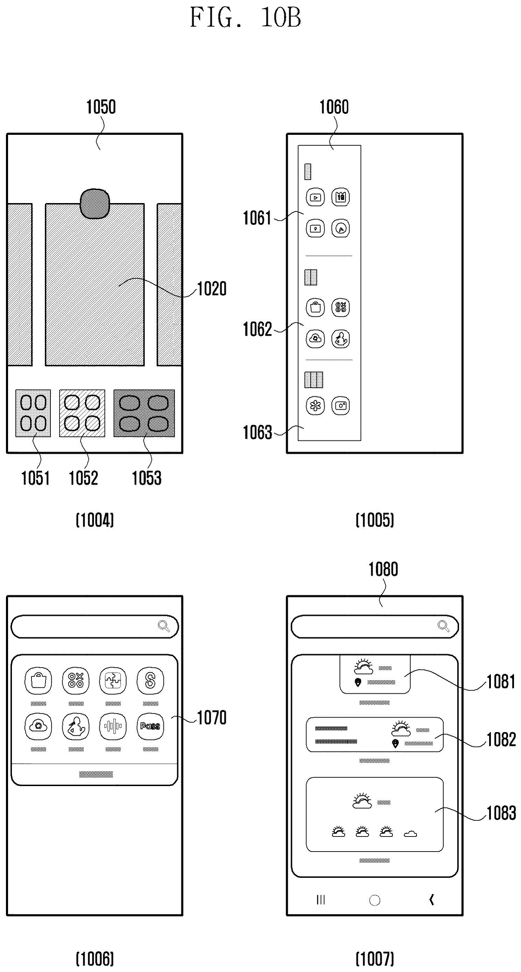

FIGS. 10A and 10B illustrate screen examples grouping and providing application information according to a state of an electronic device according to an embodiment.

With reference to FIGS. 10A and 10B, the electronic device 101 according to an embodiment may group, by electronic device state or housing structure state, and store information on apps executed in a first state, information on apps executed in a second state, and information on apps executed in a third state, and provide information on apps grouped by state through various screens.

For example, at a time when an executing application is switched from a foreground to a background, the electronic device 101 may stop the operation of the application and store (or capture) a last execution screen (or display data included in the execution screen) as an execution screen image. The electronic device 101 may record or store the electronic device state or housing structure state at the time of application switching. The electronic device may include the stored execution screen image in a recent task list.

According to an embodiment, in the case that an active area of the display is switched according to a change in the state of the electronic device 101 or the state of the housing structure, the electronic device 101 may identify a state of applications in which tasks are being executed and identify whether to restart (or re-execute) applications executed in an electronic device state different from the current electronic device state. For example, in the case of Android, whether to restart an application may be identified based on attribute values such as "screenLayout", "screenSize", and "smallestScreenSize", but this is only an example and is not limited thereto.

According to an embodiment, the electronic device 101 may display a recent task list of different sizes according to the electronic device state or housing structure state, and visually guide the user through an indicator information on apps executed when the state of the structure is different from the current electronic device state among app objects included in the recent task list.

In an embodiment, as illustrated in <1001> of FIG. 10A, the electronic device 101 may display a recent task list 1010 of a first size in a first state. The electronic device 101 may support a function of displaying an indicator that guides app information executed in a state other than the current state in the recent task list. For example, the electronic device 101 may display a first indicator 1030 that guides app information executed in a third state other than the first state among app objects 1020. App objects 1020 without indicators in the recent task list 1010 of <1001> may be applications that have a history executed in the first state. The user may recognize applications that may be executed immediately in the first state without restarting (e.g., app objects that are not displayed by an indicator) and applications that should be executed in the third state (e.g., app objects displayed by the first indicator 1030).

In an embodiment, the electronic device 101 may display a recent task list 1013 of a second size in a second state, such as <1002> or may display a recent task list 1015 of a third size in a third state, such as <1003>. The electronic device 101 may display at least one of a second indicator 1031 that guides app information executed in the second state, a third indicator 1032 that guides app information executed in the first state, or a fourth indicator 1040 that guides app information restarted (or initialized) when switching from the background to the foreground, according to the current electronic device state or housing structure state. For example, in the case that the electronic device 101 is in the second state, the electronic device 101 may display an indicator indicating the first state or the third state to app objects switched to the background in the first state or the third state in the recent task list, and in the case that the electronic device 101 is in the third state, the electronic device may display an indicator indicating the first state or the second state to app objects switched to the background in the first state or the second state. According to an embodiment, in the case that the electronic device 101 selects an app object including the fourth indicator 1040 illustrated in <1003>, the electronic device 101 may display a user interface (UI) window (e.g., pop-up window) (not illustrated) that guides that the selected application may be restarted or that a screen thereof may be initialized upon switching from the background to the foreground and that checks whether the user approves (e.g., approves or rejects). For example, in the case that the user selects an approval item on the UI window in the recent task list 1015 of <1003>, the electronic device 101 may initialize an app execution screen (or application) for the selected application and display the app execution screen in a size corresponding to the current display state. In the case that the user selects a rejection item in the user interface, the electronic device 101 may remove the UI window and maintain display of the recent task list 1015.

According to an embodiment, the electronic device 101 may provide a function of recommending and displaying an app optimized for each state according to the electronic device state or housing structure state, as illustrated in FIG. 10B.

In an embodiment, the electronic device 101 may group information on apps executed by electronic device state or housing structure state in a recent task list 1050, as illustrated in <1004>, and provide grouped information in the recent task list. For example, a first group 1051 displayed in the recent task list 1050 may include app objects executed in a first state, a second group 1052 may include app objects executed in a second state, and a third group 1053 may include app objects executed in a third state.

In an embodiment, the electronic device 101 may group information on apps executed by electronic device state or housing structure state and provide grouped information in a quick execution list 1060 (e.g., edge bar) provided in at least a portion of the display, as illustrated in <1005>. For example, a first group 1061 displayed in the quick execution list 1060 may include app objects executed in a first state, a second group 1062 may include app objects executed in a second state, and a third group 1063 may include app objects executed in a third state.

In an embodiment, the electronic device 101 may select and provide app objects included in a recently execution app search screen 1070 as apps that match a current electronic device state or housing structure state, as illustrated in <1006>.

In an embodiment, as illustrated in <1007>, the electronic device 101 may also provide widgets 1081, 1082, and 1083 of various sizes arranged on a widget screen 1080 according to the electronic device state or housing structure state.

According to an embodiment, an electronic device may include a first housing 210, a second housing 220, a third housing 230, a first hinge assembly 240 configured to couple the first housing 210 to one side of the second housing 220 and to allow the first housing 210 to rotate, a second hinge assembly 250 configured to couple the third housing 230 to the other side of the second housing 220 and to allow the third housing 230 to rotate, displays 260 and 310 including a first display area 261 disposed in the first housing 210, a second display area 262 disposed in the second housing 220 and facing in a direction opposite to the first display area 261 when the first housing 210 and the second housing 220 are folded, and a third display area 263 disposed in the third housing 230 and facing the second display area 262 when the second housing 220 and the third housing 230 are folded, a sensing device 360 for detecting a folding or unfolding state of the first housing 210, the second housing 220, and the third housing 230, memories 130 and 330 for storing executable instructions, and processors 120 and 320 for accessing the memories 130 and 330 and executing the instructions.

According to an embodiment, the processors 120 and 320 may display a first execution screen using a first display area 261 in a first state in which a first housing 210, a second housing 220, and a third housing 230 are folded relative to each other, and, while the first execution screen is displayed through the first display area 261, in the case of recognizing, based on data received from a sensing device 360, that the first state has switched to a second state in which a first hinge assembly 240 is in a fixed state and in which the second housing 220 and the third housing 230 are unfolded from a folded state by rotation of a second hinge assembly 250, the processors 120 and 320 may deactivate the first display area 261 based on switching from the first state to the second state and display a second execution screen through a second display area 262 and a third display area 263, and, while the first execution screen is displayed through the first display area 261, in the case of recognizing, based on data received from the sensing device, that the first state has switched to the third state in which the first housing 210, the second housing 220, and the third housing 230 are all unfolded by rotation of the first hinge assembly 240 and the second hinge assembly 250, the processors 120 and 320 may control the display to display the first execution screen by extending the first execution screen from the first display area 261 to the second display area 262 and the third display area 263 based on switching from the first state to the third state.

According to an embodiment, the processors 120 and 320 may, as an operation of deactivating the first display area 261 and displaying a second execution screen through the second display area 262 and the third display area 263, be further configured to display a preview window corresponding to the first execution screen executed through the deactivated first display area 261 on at least a portion of the second display area 262 and the third display area 263.

According to an embodiment, while the processors 120 and 320 deactivate the first display area 261 and display the second execution screen through the second display area 262 and the third display area 263, in the case of recognizing, based on data received from the sensing device 360, that the second state has switched to the third state in which the housings are all unfolded, the processors 120 and 320 may be configured to display the first execution screen on the first display area 261 and display the second execution screen on the second display area 262 and the third display area 263 based on switching from the second state to the third state.

According to an embodiment, the processors 120 and 320 may, as an operation of displaying the first execution screen on the first display area 261 and displaying the second execution screen on the second display area 262 and the third display area 263, be further configured to display a home screen or a recent task list as the first execution screen while maintaining the second execution screen, in the case that there is no application executed through the first display area 261 and that an app displayed on the second execution screen is initialized or restarted upon a change in resolution.

According to an embodiment, the processors 120 and 320 may, as an operation of displaying the first execution screen on the first display area 261 and displaying the second execution screen on the second display area 262 and the third display area 263, be further configured to omit display of the first execution screen and resize and display the second execution screen to a size corresponding to the first display area 261, the second display area 262, and the third display area 263, in the case that there is no application executed through the first display area 261 and that an app displayed on the second execution screen is not restarted upon a change in resolution.

According to an embodiment, the processors 120 and 320 may be configured to group, by electronic device state or housing structure state, and store information on apps executed in the first state, information on apps executed in the second state, and information on apps executed in the third state, and to reconstitute and display a widget screen, recent app search screen, or recent task list of the electronic device with information on apps executed in the currently recognized electronic device state or housing structure state.

According to an embodiment, a method of operating a screen of a foldable electronic device may include displaying a first execution screen on the display using a first display area 261 in a first state in which the first housing 210, the second housing 220, and the third housing 230 are folded relative to each other.

According to an embodiment, a method of operating a screen of a foldable electronic device may include deactivating the first display area 261 based on switching from the first state to the second state, and displaying a second execution screen on the display through the second display area 262 and the third display area 263, in the case that the electronic device recognizes, based on data received from the sensing device 360, that the first state has switched to a second state in which the first housing 210 and the second housing 220 are folded and in which the second housing 220 and the third housing 230 are unfolded, while a first execution screen is displayed through the first display area 261.

According to an embodiment, a method of operating a screen of a foldable electronic device may include displaying a first execution screen on a display by extending the first execution screen from the first display area 261 to the second display area 262 and the third display area 263 based on switching from a first state to a third state, in the case that the electronic device recognizes, based on data received from the sensing device 360, that the first state has switched to the third state in which the first housing 210, the second housing 220, and the third housing 230 are all unfolded, while the first execution screen is displayed through the first display area 261.

It should be understood that embodiments of this document and terms used therein are not intended to limit the technical features described in this document to specific embodiments, but include various modifications, equivalents, or substitutions of the embodiments. In connection with the description of the drawings, like reference numerals may be used for similar or related components. The singular form of the noun corresponding to the item may include one or more of the item, unless the relevant context clearly dictates otherwise. In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

The term "module" used in embodiments of this document may include a unit implemented in hardware, software, or firmware, and may be used interchangeably with terms such as logic, logic block, component, or circuit. The module may be an integrally formed component, or a minimum unit or a portion of the component that performs one or more functions. For example, according to an embodiment, the module may be implemented in the form of an application-specific integrated circuit (ASIC).

Embodiments of this document may be implemented into software (e.g., the program 140) including one or more instructions stored in a storage medium (e.g., the internal memory 136 or the external memory 138) readable by a machine (e.g., the electronic device 101). For example, the processor (e.g., the processor 120) of the device (e.g., the electronic device 101) may call and execute at least one instruction from one or more instructions stored in a storage medium. This makes it possible for the machine to be operated to perform at least one function according to the called at least one instruction. The one or more instructions may include a code generated by a compiler or a code executable by an interpreter. The machine readable storage medium may be provided in the form of a non-transitory storage medium. Here, 'non-transitory' only means that the storage medium is a tangible device and does not include a signal (e.g., electromagnetic wave), and this term does not distinguish the case that data is semi-permanently stored in the storage medium and the case that data is temporarily stored.

According to an embodiment, a method according to embodiments disclosed in this document may be included and provided in a computer program product. Computer program products may be traded between sellers and buyers as commodities. The computer program product may be distributed in the form of a machine readable storage medium (e.g., compact disc read only memory (CD-ROM)), or may be distributed (e.g., download or upload) via an application store (e.g., Play Store^{™}) or online or directly between two user devices (e.g., smartphones). In the case of online distribution, at least a part of the computer program product may be at least temporarily stored or temporarily generated in a machine readable storage medium such as a memory of a server of a manufacturer, a server of an application store, or a relay server.

According to embodiments, each component (e.g., module or program) of the above-described components may include a singular entity or a plurality of entities, and some of the plurality of entities may be separately disposed in other components. According to an embodiment, one or more components or operations among the above-described corresponding components may be omitted, or one or more other components or operations may be added. Alternatively or additionally, a plurality of components (e.g., module or program) may be integrated into one component. In this case, the integrated component may perform one or more functions of each of the plurality of components identically or similarly to the functions performed by the corresponding component among the plurality of components prior to the integration. According to an embodiment, operations performed by a module, program, or other component may be executed sequentially, in parallel, repeatedly, or heuristically, or one or more of the operations may be executed in a different order, or omitted, or one or more other operations may be added.

## Claims

1. An electronic device, comprising:
a second housing;
a first housing foldably coupled to one side of the second housing;
a third housing foldably coupled to the other side of the second housing;
a display including a first display area disposed in the first housing, a second display area disposed in the second housing, and a third display area disposed in the third housing;
a sensing device configured to detect a folding or unfolding state of the first housing, the second housing, and the third housing;
a memory configured to store executable instructions; and
a processor,
wherein, when the instructions are executed by the processor, the instructions cause the electronic device to:
control the display to display a first execution screen through the first display area in a first state in which the first housing, the second housing, and the third housing are folded relative to each other,
control the display to deactivate the first display area and to display a second execution screen through the second display area and the third display area, in the case that the electronic device recognizes, based on data received from the sensing device, that the first state has switched to a second state in which the first housing and the second housing are folded and in which the second housing and the third housing are unfolded, while the first execution screen is displayed through the first display area in the first state, and
control the display to display the first execution screen by extending the first execution screen from the first display area to the second display area and the third display area, in the case that the electronic device recognizes, based on data received from the sensing device, that the first state has switched to a third state in which the first housing, the second housing, and the third housing are all unfolded, while the first execution screen is displayed through the first display area in the first state,
wherein the second execution screen is a screen different from the first execution screen.

2. The electronic device of claim 1, further comprising a first hinge assembly configured such that the first housing is folded in a first direction relative to the second housing, and a second hinge assembly configured such that the third housing is folded in a second direction opposite to the first direction relative to the second housing,
wherein the first hinge assembly is implemented to fold the first housing and the second housing in an out-folding manner such that the first display area and the second display area are opposite to each other, and the second hinge assembly is implemented to fold the second housing and the third housing in an in-folding manner such that the second display area and the third display area face each other.

3. The electronic device of claim 2, wherein the display is implemented to include a first display including the first display area disposed in the first housing, and a second display including the second display area disposed in the second housing and the third display area disposed in the third housing.

4. The electronic device of claim 2, wherein the display is implemented to include:
a first display including the first display area disposed in the first housing;
a second display including the second display area disposed in the second housing; and
a third display including the third display area disposed in the third housing.

5. The electronic device of claim 3 or 4, wherein the first state is a state in which the first display area is exposed to the outside in a first direction, and
the second state is a state in which the first display area is switched in a second direction opposite to the first direction and in which the second display area and the third display area are exposed to the outside in the first direction.

6. The electronic device of claim 5, wherein the instructions cause the electronic device to:
as an operation of deactivating the first display area and displaying the second execution screen through the second display area and the third display area,
display a preview window corresponding to the first execution screen displayed through the first display area on at least a part of the second display area and the third display area in the first state.

7. The electronic device of claim 6, wherein the instructions cause the electronic device to display the preview window in the form of a notification state window (notification bar or panel) or a picture in picture (PIP) pop-up.

8. The electronic device of claim 5, wherein the instructions cause the electronic device to activate the first display area to display the first execution screen on the first display area, and display the second execution screen on the display on the second display area and the third display area, in the case that the electronic device recognizes, based on data received from the sensing device, that the second state has switched to the third state in which the housings are all unfolded, while the second execution screen is displayed in the second state.

9. The electronic device of claim 8, wherein the instructions cause the electronic device to group, by electronic device state, and store information on applications executed in the first state, information on applications executed in the second state, and information on applications executed in the third state.

10. The electronic device of claim 9, wherein the instructions cause the electronic device to:
as an operation of displaying the first execution screen on the first display area and displaying the second execution screen on the second display area and the third display area in the third state,
display a home screen or a recent task list as the first execution screen on the first display area, in the case that there is no application related to the first execution screen and that an application related to the second execution screen is initialized or restarted upon a change in resolution.

11. The electronic device of claim 10, wherein the instructions cause the electronic device to:
as an operation of displaying the first execution screen on the first display area and displaying the second execution screen on the second display area and the third display area in the third state,
omit display of the first execution screen and resize and display the second execution screen in a size corresponding to the first display area, the second display area, and the third display area, in the case that there is no application related to the first execution screen and that an application related to the second execution screen is not initialized or restarted upon a change in resolution.

12. The electronic device of claim 10, wherein the instructions cause the electronic device to display, overlapping the application object, at least one of a first type indicator that guides an executable electronic device state for each application object in relation to a home screen or a recent task list displayed on the first display area, or a second type indicator that guides that an application may be restarted or initialized when switching from a background to a foreground.

13. The electronic device of claim 12, wherein the instructions cause the electronic device to display applications executed in an electronic device state different from a currently recognized electronic device state in a grouped form when displaying the recent task list in the first display area.

14. The electronic device of claim 12, wherein the instructions cause the electronic device to reconfigure a widget screen or recent app search screen with application information executed in a currently recognized electronic device state and display the reconfigured widget screen or recent app search screen on the display when displaying a widget screen or a recent app search screen on the display.

15. A method of operating a screen of a foldable electronic device, the method comprising:
displaying a first execution screen through a display of a first display area disposed in a first housing in a first state in which the first housing, a second housing, and a third housing are folded relative to each other;
deactivating the first display area and displaying a second execution screen through a display of a second display area disposed in the second housing and a third display area disposed in the third housing, in the case that the electronic device recognizes that the first state has switched to a second state in which the first housing and the second housing are folded and in which the second housing and the third housing are unfolded, while the first execution screen is displayed through the first display area in the first state; and
displaying the first execution screen through a display of the first display area, the second display area, and the third display area, in the case that the electronic device recognizes that the first state has switched to a third state in which the first housing, the second housing, and the third housing are all unfolded, while the first execution screen is displayed through the first display area in the first state, wherein the second execution screen is a screen different from the first execution screen.
